(19) **Europäisches Patentamt**
**European Patent Office**
**Office européen des brevets**

(11) **EP 4 734 356 A1**

(12) **EUROPÄISCHE PATENTANMELDUNG**

(43) Veröffentlichungstag:
   **29.04.2026   Patentblatt 2026/18**

(21) Anmeldenummer: **25209258.0**

(22) Anmeldetag: **16.10.2025**

(51) Internationale Patentklassifikation (IPC):
   *H02P 21/22 (2016.01)*

(52) Gemeinsame Patentklassifikation (CPC):
   **H02P 21/22;** H02P 2201/15; H02P 2205/03

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH LA MA MD TN**

(30) Priorität:   **24.10.2024   DE 102024130971**

(71) Anmelder: **ebm-papst Mulfingen GmbH & Co. KGaA & Co. KG**
   **74673 Mulfingen (DE)**

(72) Erfinder:
   • **Schroth, Sebastian**
     **74635 Kupferzell (DE)**
   • **Greiss, Marius**
     **97070 Würzburg (DE)**

(74) Vertreter: **Rüger Abel Patentanwälte PartGmbB**
   **Webergasse 3**
   **73728 Esslingen a. N. (DE)**

(54)   **VORRICHTUNG UND VERFAHREN ZUM BETREIBEN EINES ELEKTROMOTORS SOWIE SYSTEM AUFWEISEND DIE VORRICHTUNG UND DEN ELEKTROMOTOR**

(57)   Die Erfindung betrifft eine Vorrichtung (13) sowie ein Verfahren zum Betreiben eines Elektromotors (12). Die Vorrichtung (13) hat eine vorzugsweise passive Gleichrichterschaltung (25) und eine steuerbare Wechselrichterschaltung (31). Es wird eine gewünschte Stromform bzw. ein gewünschter Stromverlauf (wf) für wenigstens eine Phase (iv1, iv2, iv3) des Versorgungsstromes (iv) vorgegeben. Basierend auf einer Vektorregelung des Elektromotors (12) kann ein erster Rotorstrom (id) in einem rotorfesten Koordinatensystem ermittelt werden, wobei der erste Rotorstrom die mechanische Leistung (Pm) des Elektromotors (12) nicht beeinflusst. Basierend auf dem Rotorstrom (id) können dann ein oder mehrere Steuersignale (b1 bis b6) zur Steuerung der Wechselrichterschaltung (31) in einer Steuerschaltung (33) ermittelt und die Wechselrichterschaltung (31) entsprechend gesteuert werden, wodurch sich der gewünschte Stromverlauf (wf) für den betreffenden Strom oder die betreffenden Ströme ergibt.

Fig. 2

**Beschreibung**

Die Erfindung betrifft eine Vorrichtung zum Betreiben eines Elektromotors, ein System aufweisend die Vorrichtung sowie den Elektromotor und ein Verfahren zum Betreiben des Elektromotors.

Beim Betreiben von Elektromotoren kann es erforderlich oder wünschenswert sein, die von einem Versorgungsnetz aufgenommene Blindleistung zu beeinflussen, um eine Belastung des Versorgungsnetzes durch Blindleistung zu regulieren und vorzugsweise zu minimieren. Hierzu ist es bekannt, Verfahren zur Leistungsfaktorkorrektur (Power Factor Correction, PFC) einzusetzen.

EP 3 772 165 A1 beschreibt eine Vorrichtung zum Betreiben eines Gleichrichters, der an ein Versorgungsnetz angeschlossen ist. Der Gleichrichter hat eine Gleichrichterschaltung zur Erzeugung einer gleichgerichteten Spannung, die eingangsseitig einem Gleichspannungssteller zugeführt wird. Der Gleichspannungssteller wird derart geregelt, dass der Oberwellenanteil in einem vom Versorgungsnetz aufgenommenen Versorgungsstrom minimiert wird.

EP 2 482 442 A1 offenbart ein Verfahren und ein Steuersystem zum Ansteuern eines bürstenlosen Elektromotors. Hierbei wird eine dreiphasige Versorgungsspannung eines Versorgungsnetzes zunächst in eine gleichgerichtete Spannung in einem Zwischenkreis gleichgerichtet und diese dann mittels eines Wechselrichters für den Betrieb des Elektromotors umgewandelt. Ein Glättungskondensator im Zwischenkreis soll entfallen oder lediglich eine geringe Impedanz aufweisen. Die gleichgerichtete Spannung im Zwischenkreis wird hinsichtlich ihres Wechselanteils überwacht und abhängig von der Größe des Wechselanteils wird eine Steuerung des Motors beeinflusst, um den Wechselanteil zu begrenzen. Dies geschieht durch eine entsprechende Taktung eines Wechselrichters. Nachteilig ist hierbei, dass zur Beeinflussung des vom Versorgungsnetz aufgenommenen Versorgungsstromes eine zusätzliche Einrichtung, wie etwa eine Einrichtung zur Leistungsfaktorkorrektur, benötigt wird.

In EP 2 276 162 A1 ist ein Verfahren und ein Steuersystem zum Ansteuern eines bürstenlosen Elektromotors bekannt. Basierend auf einer Vektorregelung soll mittels eines Rotorstromes eine dynamische Feldschwächung mit doppelter Netzfrequenz erreicht werden. Die Phasenlage und die Amplitude des Rotorstromes werden so geregelt, dass die Welligkeit eines weiteren, das Drehmoment des Elektromotors bestimmenden Rotorstromes minimal ist. Dabei kommt es zu einer Rückspeisung elektrischer Energie in den Gleichspannungszwischenkreis und einen dort vorhandenen Zwischenkreiskondensator. Wenn sich der Zwischenkreiskondensator zur Reduzierung der Drehmomentwelligkeit voll auflädt ist die Aufnahme elektrischer Energie aus dem Versorgungsnetz blockiert. In diesem Fall kann eine Beeinflussung des Versorgungsstromes aus dem Versorgungsnetz nicht mehr erfolgen. Die Kapazität des Zwischenkreiskondensators zu vergrößern hätte wiederum hohe Kosten zur Folge. Außerdem kann das Verfahren nicht zur Beeinflussung eines dreiphasigen Versorgungsstromes aus einem Versorgungsnetz verwendet werden.

Bei dem aus EP 3 610 570 B1 bekannten Verfahren wird ebenfalls eine Vektorregelung bzw. feldorientierte Regelung eines Elektromotors vorgeschlagen, um eine konstante Motorleistung trotz pulsierender Gleichspannung zu erzielen. Zur Beeinflussung des Versorgungsstromes eines Versorgungsnetzes wird eine zusätzliche Leistungsfaktorkorrektur benötigt.

CN 1 15 378 332 A betrifft die Regelung eines permanent erregten Synchronmotors. Der Motor wird über eine Wandlerschaltung mit einem Gleichrichter und einem steuerbaren Wechselrichter betrieben. Um Oberwellen zu reduzieren und den Leistungsfaktor zu erhöhen wird eine Regelung der beiden Rotorströme durchgeführt, die in einem gegenüber dem Rotor unbeweglichen Rotorkoordinatensystem in Richtung der Koordinatenachsen (d, q) definiert sind.

Es kann als Aufgabe der vorliegenden Erfindung angesehen werden, eine Vorrichtung und ein Verfahren zum Betreiben eines Elektromotors bereitzustellen, um auf einfache Weise einen von einem Wechselspannungsnetz bereitgestellten Versorgungsstrom zu beeinflussen und insbesondere Oberschwingungsanteile des Versorgungsstroms zu reduzieren.

Diese Aufgabe wird durch eine Vorrichtung mit den Merkmalen des Patentanspruches 1 sowie ein Verfahren mit den Merkmalen des Patentanspruches 14 gelöst.

Die erfindungsgemäße Vorrichtung ist zum Betreiben eines Elektromotors eingerichtet. Die Vorrichtung kann gemeinsam mit dem zu betreibenden Elektromotor Bestandteil eines Systems sein. Das System kann beispielsweise dazu eingerichtet sein, eine Fluidströmung zu erzeugen, insbesondere eine Gasströmung, beispielsweise eine Luftströmung. Der Elektromotor kann beispielsweise Bestandteil eines Ventilators sein. Vorzugsweise handelt es sich bei dem Elektromotor um einen elektrisch kommutierten Gleichstrommotor (EC-Motor), der auch als bürstenloser Gleichstrommotor bezeichnet werden kann.

Die Vorrichtung hat eine Wandlerschaltung, aufweisend eine Gleichrichterschaltung und eine steuerbare Wechselrichterschaltung. Bei einer bevorzugten Ausführungsform ist die Gleichrichterschaltung nicht steuerbar und weist keine durch ein Steuersignal steuerbare und insbesondere zwischen verschiedenen Schaltzuständen umschaltbare Bauelemente auf. Die Gleichrichterschaltung kann zur Gleichrichtung der Versorgungsspannung des Wechselspannungsnetzes mehrere Dioden aufweisen, beispielsweise zwei Dioden pro Phase des Wechselspannungsnetzes. Bevorzugt handelt es sich um ein dreiphasiges Wechselspannungsnetz, so dass eine dreiphasige Versorgungsspannung und ein dreiphasiger Versorgungsstrom bereitgestellt werden.

Die Wechselrichterschaltung ist mittels einer Steuerschaltung steuerbar. Der Wechselrichterschaltung wird die von der Gleichrichterschaltung gleichgerichtete Spannung (kann auch als Zwischenkreisspannung bezeichnet werden) bereitgestellt. Die Wechselrichterschaltung erzeugt wenigstens einen Motor-Phasenstrom für einen ausgangsseitig an die Wechselrichterschaltung angeschlossenen Elektromotor. Die Motor-Phasenströme dienen insbesondere zur Erzeugung eines Drehfeldes im Elektromotor, um einen Rotor des Elektromotors rotierend anzutreiben. Zur Erzeugung des Drehfeldes kann der Elektromotor mehrere Phasen, beispielsweise drei Phasen aufweisen, denen jeweils ein Motor-Phasenstrom bereitgestellt wird. Jede Phase kann mehrere in Umfangsrichtung um die Drehachse des Rotors verteilt angeordnete Wicklungen aufweisen. Die Wicklungen unterschiedlicher Phasen sind in Umfangsrichtung nebeneinander angeordnet.

Die Steuerschaltung ist dazu eingerichtet, wie folgt zu arbeiten:

Für den Rotor ist ein sich gemeinsam mit dem Rotor drehendes, relativ zum Rotor unbewegliches Rotorkoordinatensystem definiert. Das Rotorkoordinatensystem hat insbesondere zwei Koordinatenachsen, die als d-Achse und q-Achse bezeichnet werden können. Die q-Achse ist dabei im Wesentlichen in Magnetisierungsrichtung des Rotors ausgerichtet, während die d-Achse rechtwinklig zur q-Achse und somit im Wesentlichen rechtwinklig zur Magnetisierungsrichtung des Rotors ausgerichtet ist. Vorzugsweise werden zwei Rotorströme definiert, nämlich ein erster Rotorstrom (d-Strom) in Richtung der d-Achse und ein zweiter Rotorstrom (q-Strom) in Richtung der q-Achse. Mittels des ersten Rotorstroms kann die Flussdichte des Magnetfeldes des Rotors beeinflusst werden. Mittels des zweiten Rotorstroms kann die mechanische Leistung und insbesondere das Drehmoment des Elektromotors beeinflusst werden. Die mechanische Leistung ist proportional zum Drehmoment.

Erfindungsgemäß wird der erste Rotorstrom in Richtung der d-Achse mittels der Steuerschaltung derart ermittelt, dass sich ein vorgegebener Stromverlauf für wenigstens eine Phase, mehrere Phasen oder vorzugsweise alle Phasen des Versorgungsstromes ergibt. Es kann daher eine gewünschte Stromform oder ein gewünschter Stromverlauf für den Versorgungsstrom (insbesondere für eine, mehrere oder alle Phasen des Versorgungsstromes) vorgegeben werden. Mittels der Wandlerschaltung und insbesondere der Wechselrichterschaltung wird für jede Phase des Elektromotors ein Motor-Phasenstrom eingestellt, um das Drehfeld zu erzeugen. Aus der wenigstens einen Phase des Versorgungsstromes kann mittels der Wandlerschaltung wenigstens ein Motor-Phasenstrom (beispielsweise drei Motor-Phasenströme) erzeugt werden. Der wenigstens eine Motor-Phasenstrom kann anhand der Steuerung der Wandlerschaltung - vorzugsweise ausschließlich anhand der Steuerung der Wechselrichterschaltung - eingestellt werden, wobei auch die wenigstens eine Phase des Versorgungsstromes beeinflusst wird. Mittels des wenigstens einen Motor-Phasenstromes kann daher die wenigstens eine Phase des Versorgungsstromes mit dem Ziel beeinflusst werden, den jeweils vorgegebenen Stromverlauf zu erreichen. Zur Einstellung der wenigstens einen Phase des Versorgungsstromes wird erfindungsgemäß der erste Rotorstrom (d-Strom) derart ermittelt, dass sich daraus der wenigstens eine Motor-Phasenstrom und damit der vorgegebene Stromverlauf des Versorgungsstromes ergibt.

Der Stromverlauf des Versorgungsstromes kann gesteuert oder geregelt werden. Der Stromverlauf für die wenigstens eine Phase des Versorgungsstromes ist insbesondere durch eine Wellenform gekennzeichnet, beispielsweise eine sinusförmige Wellenform. Auch davon abweichende Wellenformen, wie zum Beispiel Wellenformen mit dreieckigen oder trapezförmigen oder stufenförmigen Halbwellen können vorgegeben werden. Zusätzlich oder alternativ kann auch wenigstens ein weiterer Stromverlaufsparameter für wenigstens eine Phase des Versorgungsstromes vorgegeben werden, beispielsweise eine Phasenverschiebung zwischen dem Versorgungsstrom und der Versorgungsspannung (die insbesondere gleich null vorgegeben sein kann) und/oder ein maximaler Gradient (zeitliche Änderung) des Versorgungsstromes. Die Periodendauer des Stromverlaufs entspricht insbesondere der Periodendauer der Versorgungsspannung.

Die Beeinflussung des ersten Rotorstromes in Richtung der rotorfesten d-Achse (d-Strom) lässt die mechanische Leistung des Elektromotors unbeeinflusst, so dass eine Stromformung des Versorgungsstromes ermöglicht wird, ohne dabei die vom Elektromotor bereitgestellte mechanische Leistung zu beeinflussen.

Basierend auf dem derart ermittelten ersten Rotorstrom erfolgt dann die Ermittlung wenigstens eines Steuersignals zur Ansteuerung der Wechselrichterschaltung. Die Ansteuerung der Wechselrichterschaltung kann beispielsweise basierend auf einer Raumzeigermodulation (englisch: Space Vector Pulse Width Modulation) durchgeführt werden.

Somit kann basierend auf der Vektorregelung (auch feldorientierte Regelung genannt) des Elektromotors durch den ersten Rotorstrom im relativ zum Rotor ortsfesten Rotorkoordinatensystem eine Beeinflussung des vom Wechselspannungsnetz bereitgestellten Versorgungsstromes erfolgen, um eine gewünschte Stromform bzw. einen gewünschten Stromverlauf zu erreichen. Dadurch können insbesondere dessen Oberwellen reduziert werden. Zusätzlich oder alternativ kann die aus dem Wechselspannungsnetz aufgenommene Blindleistung reguliert bzw. reduziert werden. Um den Stromverlauf des Versorgungsstromes zu beeinflussen, kann dem Rotormagnetfeld Energie zugeführt oder entnommen werden. Da diese Beeinflussung über die Einstellung des ersten Rotorstromes (d-Strom) erfolgt, der die vom Elektromotor bereitgestellte mechanische Leistung nicht beeinflusst, kann sehr effizient die Stromformung des Netzstromes erfolgen, ohne den Betrieb des Elektromotors unerwünscht zu beeinträchtigen. Eine aktive Schaltung zur Leistungsfaktorkorrektur ist nicht notwendig. Insbesondere können aktiv gesteuerte Schaltungen (z.B. Hochsetzsteller und/oder Tiefsetzsteller und/oder Gleichspannungswandler) und/oder netz- bzw. eingangsseitige, aktiv gesteuerte Gleichrichterschaltungen entfallen.

Durch die erfindungsgemäße Beeinflussung des ersten Rotorstromes wird insbesondere keine gezielte Beeinflussung der von der Gleichrichterschaltung bereitgestellte gleichgerichteten Spannung (Zwischenkreisspannung) durchgeführt. Bei der Ermittlung des ersten Rotorstroms zur Beeinflussung des Stromverlaufs der Netzspannung werden vorzugsweise keinerlei Vorgaben für die gleichgerichtete Spannung im Gleichspannungszwischenkreis berücksichtigt. Beispielsweise erfolgt die Bestimmung des ersten Rotorstromes ohne Vorgabe eines Betrages für eine Spannungspulsation der gleichgerichteten Spannung. Durch die Erfindung soll nicht die Zwischenkreisspannung, sondern die Stromform bzw. der Stromverlauf des Versorgungsstromes beeinflusst werden.

Es ist vorteilhaft, wenn der Steuerschaltung für jede Phase des Versorgungsstromes jeweils ein gewünschter Stromverlauf vorgegeben ist, wobei die Stromverläufe für die mehreren Phasen (z.B. drei Phasen) abgesehen von der Phasenverschiebung zwischen den Phasen identisch sein können. Der Stromverlauf definiert für jede Phase dessen zeitliche Änderung und/oder Wellenform und/oder Phasenlage gegenüber einer Spannung derselben Phase. Beispielsweise kann der Versorgungsstrom positive und negative im Wesentlichen sinusförmige Halbwellen mit einer definierten Zeitdauer aufweisen.

Beispielsweise können für jede Phase des Versorgungsstromes für jede Periode mehrere positive Stromhalbwellen und mehrere negative Stromhalbwellen jeweils symmetrisch zu einem Nulldurchgang der zugeordneten Phasenspannung vorgegeben und eingestellt werden.

Es ist bevorzugt, wenn die Steuerschaltung den ersten Rotorstrom derart ermittelt, dass sowohl die Drehzahl des Rotors, als auch das Drehmoment des Elektromotors unverändert bleiben.

Wie erläutert, wird zur Beeinflussung des wenigstens einen Motor-Phasenstromes und mithin des Versorgungsstromes nur ein einziger Rotorstrom ermittelt und zur Ermittlung des wenigstens einen Steuersignals verwendet, insbesondere der Rotorstrom parallel zur d-Achse des Rotorkoordinatensystems (d-Strom). Dieser Rotorstrom wird hier als erster Rotorstrom bezeichnet. Ein vom ersten Rotorstrom verschiedener, parallel zur q-Achse des Rotorkoordinatensystems ausgerichteter zweiter Rotorstrom (q-Strom) kann unabhängig vom ersten Rotorstrom verwendet werden, um eine vorgegebene mechanische Leistung und insbesondere ein vorgegebenes Drehmoment einzustellen. Wie bereits erläutert, ist die Einstellung der mechanischen Leistung und insbesondere des Drehmoments unabhängig von der erfindungsgemäß durchgeführten Stromformung des wenigstens einen Motor-Phasenstromes und/oder der wenigstens einen Phase des Versorgungsstromes. Daher kann der Versorgungsstrom beeinflusst werden, auch wenn die mechanische Leistung konstant bleiben soll.

Vorzugsweise ist hat die Wandlerschaltung keine zusätzliche steuerbare Schaltung zur Durchführung einer Leistungsfaktorkorrektur. Insbesondere ist die Gleichrichterschaltung nicht steuerbar, sondern besteht aus passiven, nicht steuerbaren Bauelementen, wie etwa Dioden. Eine netzseitige getaktete bzw. schaltbare Gleichrichterschaltung entfällt. Mit einer hohen Frequenz angesteuerte Schalter können in der Gleichrichterschaltung somit entfallen.

Es ist bevorzugt, wenn im Gleichspannungszwischenkreis zwischen der Gleichrichterschaltung und der Wechselrichterschaltung ein Zwischenkreiskondensator und/ oder ein anderer geeigneter Energiespeicher vorhanden ist. Am Zwischenkreiskondensator liegt die von der Gleichrichterschaltung gleichgerichtete Spannung an. Diese gleichgerichtete Spannung ist insbesondere pulsierend und kann relativ hohe Spannungsänderungen aufgrund der Pulsation aufweisen. Die Kapazität des Zwischenkreiskondensators ist vorzugsweise relativ klein. Insbesondere kann der Kondensator beim Betrieb der Wandlerschaltung während jeder Periode des ersten Rotorstromes von einem Minimalwert zu einem Maximalwert aufgeladen und vom Maximalwert wieder zu einem Minimalwert entladen werden.

Unter Verwendung von irgendeinem Ausführungsbeispiel der vorstehend beschriebenen Vorrichtung oder einem abgewandelten Ausführungsbeispiel der Vorrichtung kann ein erfindungsgemäßes Verfahren durchgeführt werden. Das Verfahren umfasst das Gleichrichten einer von einem Wechselspannungsnetz bereitgestellten Versorgungsspannung. Vom Wechselspannungsnetz wird außerdem ein vorzugsweise mehrphasiger Versorgungsstrom bereitgestellt, dessen Stromverlauf beeinflusst werden soll. Der Versorgungsstrom wird in wenigstens eine Motor-Phasenstrom gewandelt und dient zum Betreiben des Elektromotors, insbesondere zur Erzeugung eines Drehfeldes. Der wenigstens eine Motor-Phasenstrom beeinflusst wiederum den Stromverlauf des Versorgungsstromes, so dass mittelbar über den Motor-Phasenstrom der Versorgungsstrom beeinflusst werden kann.

In einem gegenüber dem Rotor des Elektromotors unbeweglichen Rotorkoordinatensystem wird ein Rotorstrom ermittelt, der hier als erster Rotorstrom bezeichnet wird. Der erste Rotorstrom wird derart ermittelt, dass ein vorgegebener Stromverlauf für wenigstens eine Phase des Versorgungsstromes und/oder wenigstens einen Motor-Phasenstrom erreicht wird. Bei dieser Stromformung bleibt die mechanische Leistung des Elektromotors unbeeinflusst. Die mechanische Leistung des Elektromotors und somit dessen Arbeits- oder Betriebspunkt kann unabhängig von der Beeinflussung der Stromform des wenigstens einen Motor-Phasenstroms bzw. des Versorgungsstromes vorgegeben und eingestellt werden. Basierend auf dem ermittelten ersten Rotorstrom wird wenigstens ein Steuersignal ermittelt, das anschließend zur Erzeugung des wenigstens einen Motor-Phasenstroms aus der gleichgerichteten Spannung verwendet wird.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele der Erfindung basierend auf der beigefügten Zeichnung im Einzelnen erläutert. In der Zeichnung zeigen:

Figur 1 eine schematische Darstellung eines Ausführungsbeispiels eines Systems aufweisend eine Vorrichtung zum Betreiben eines Elektromotors sowie einen Elektromotor,

Figur 2 ein Ausführungsbeispiel einer Vorrichtung zum Betreiben eines Elektromotors sowie den Elektromotor in einem Blockschaltbild,

Figur 3 ein Blockschaltbild eines Ausführungsbeispiels einer Steuerung bzw. Regelung zur Verwendung in der Vorrichtung gemäß der Figuren 1 und 2,

Figur 4 eine schematische Prinzipdarstellung von Spannungen und Strömen, die sich bei der Erfindung ergibt und

Figur 5 eine Prinzipdarstellung von Spannungen und Strömen ohne die Verwendung der vorliegenden Erfindung.

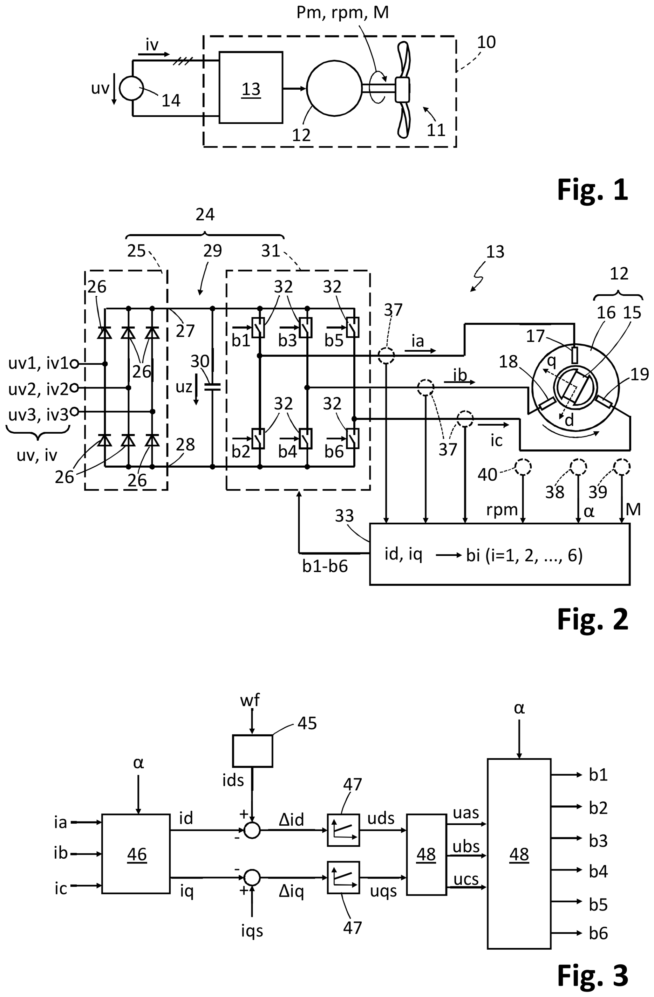

In Figur 1 ist schematisch ein Ausführungsbeispiel eines Systems 10 veranschaulicht, das zur Erzeugung einer Fluidströmung und beispielsgemäß einer Gasströmung, vorzugsweise einer Luftströmung, eingerichtet ist. Das System 10 hat eine Strömungserzeugungseinrichtung, die beim Ausführungsbeispiel als Ventilator 11 ausgeführt ist, aufweisend einen Elektromotor 12. Der Elektromotor 12 kann ein Ventilatorrad, Ventilatorflügel oder dergleichen drehend antreiben kann, um eine Gasströmung beziehungsweise Luftströmung zu erzeugen. Die Strömungserzeugungseinrichtung könnte alternativ auch eine Pumpe zur Erzeugung einer Fluidströmung sein.

Das System 10 weist außerdem eine Vorrichtung 13 auf, die zum Betreiben des Elektromotors 12 eingerichtet ist. Die Vorrichtung 13 steuert den Elektromotor 12 und versorgt diesen mit der für den Betrieb erforderlichen elektrischen Leistung. Dazu kann die Vorrichtung 13 an eine Wechselspannungsquelle 14 eines elektrischen Versorgungsnetzes angeschlossen werden. Die Wechselspannungsquelle 14 stellt eine Versorgungsspannung uv sowie einen Versorgungsstrom iv bereit, wenn die Vorrichtung 13 elektrische Leistung aus dem Versorgungsnetz beziehen will. Wie es in Figur 1 lediglich schematisch dargestellt ist, ist das Versorgungsnetz beim Ausführungsbeispiel mehrphasig, vorzugsweise dreiphasig ausgebildet.

Der Elektromotor 12 stellt im Betrieb eine mechanische Leistung Pm bereit, beispielsweise um bei dem in Figur 1 veranschaulichten System 10 das Ventilatorrad bzw. die Ventilatorflügel anzutreiben. Die mechanische Leistung Pm entspricht dabei dem Produkt aus dem Drehmoment M des Elektromotors 12 und der Drehzahl rpm eines Rotors 15 des Elektromotors 12. Bei anderen Systemen 10 kann die vom Elektromotor 12 bereitgestellte mechanische Leistung Pm auch zum Antrieb anderer Einrichtungen verwendet werden.

Ein Ausführungsbeispiel der Vorrichtung 13 und der Elektromotor 12 mit einem Rotor 15 und einem Stator 16 sind im Blockschaltbild nach Figur 2 gezeigt. Beim Ausführungsbeispiel ist der Elektromotor 12 als elektrisch kommutierter Gleichstrommotor (EC-Motor) ausgebildet. Ein solcher Motor wird auch als bürstenloser Gleichstrommotor (BLDC) bezeichnet. Zur Erzeugung eines Drehfeldes hat der Elektromotor 12 bzw. der Stator 16 mehrere Motorphasen, die in Drehrichtung des Rotors 15 verteilt um eine Drehachse angeordnet sind. Bei dem in Figur 2 dargestellten Ausführungsbeispiel sind drei Motorphasen vorhanden: eine erste Motorphase 17, eine zweite Motorphase 18 und eine dritte Motorphase 19. Jede Motorphase 17, 18, 19 kann abhängig von der Ausgestaltung des Stators 16 eine oder mehrere Wicklungen an unterschiedlichen Positionen in Drehrichtung um die Drehachse aufweisen. Das Rotormagnetfeld des Rotors 15 wird beispielsgemäß durch Permanentmagnete erzeugt.

Ein Rotorkoordinatensystem d, q aufweisend eine d-Achse und eine q-Achse, die orthogonal zueinander ausgerichtet sind, ist unbeweglich gegenüber dem Rotor 15 definiert. Das Rotorkoordinatensystem dreht sich gemeinsam mit dem Rotor um die Drehachse. Die q-Achse ist in Richtung der magnetischen Pole des Rotors 15 orientiert, während die d-Achse rechtwinklig dazu orientiert ist. Der magnetische Nordpol und der magnetische Südpol des Rotors 15 sind somit in Richtung der q-Achse nebeneinander angeordnet.

Die Vorrichtung 13 ist zur Steuerung des Betriebs des Elektromotors 12 eingerichtet. Hierzu steuert oder regelt die Vorrichtung 13 einen ersten Motor-Phasenstrom ia für die erste Motorphase 17, einen zweiten Motor-Phasenstrom ib für die zweite Motorphase 18, sowie einen dritten Motor-Phasenstrom ic für die dritte Motorphase 19. Die Motor-Phasenströme ia, ib, ic werden mittels einer Wandlerschaltung 24 eingestellt.

Die Wandlerschaltung 24 hat eine Gleichrichterschaltung 25, die eingangsseitig an das Versorgungsnetz und mithin die Wechselspannungsquelle 14 des Versorgungsnetzes angeschlossen werden kann. Die Gleichrichterschaltung 25 weist drei Gleichrichterzweige mit jeweils zwei Gleichrichterdioden 26 auf. In jedem Zweig sind die Gleichrichterdioden 26 in eine gemeinsame Durchlassrichtung gepolt. Die Gleichrichterdioden 26 jedes Gleichrichterzweiges bilden in an sich bekannter Weise eine Reihenschaltung, deren Mittenabgriff mit jeweils einer Phase des Versorgungsnetzes verbunden ist. Die kathodenseitigen Anschlüsse jedes Gleichrichterzweiges sind mit einem ersten Gleichspannungsanschluss 27 und alle anodenseitigen Anschlüsse jedes Gleichrichterzweiges sind mit einem zweiten Gleichspannungsanschluss 28 elektrisch verbunden. Zwischen dem ersten Gleichspannungsanschluss 27 und dem zweiten Gleichspannungsanschluss 28 stellt die Gleichrichterschaltung 25 ausgangsseitig eine gleichgerichtete Spannung bereit.

Die gleichgerichtete Spannung kann hier als Zwischenkreisspannung uz bezeichnet werden. Die Zwischenkreisspannung uz wird an einem Gleichspannungszwischenkreis 29 der Wandlerschaltung 24 bereitgestellt. Der Gleichspannungszwischenkreis 29 weist beim Ausführungsbeispiel einen Zwischenkreiskondensator 30 auf, an dem die Zwischenkreisspannung uz anliegt. Die Kapazität Cz des Zwischenkreiskondensators 30 kann vergleichsweise klein gehalten werden, da erfindungsgemäß eine Stromformung des Versorgungsstromes iv erfolgen kann, selbst wenn die Zwischenkreisspannung uz eine Spannungspulsation mit vergleichsweise großem Betrag aufweist. Beispielsweise kann der Betrag der Spannungsänderung mindestens 30% oder mindestens 50% vom Maximalwert der Zwischenkreisspannung uz sein. Beim Ausführungsbeispiel wird die Zwischenkreisspannung uz nicht gemäß einer Vorgabe gesteuert oder geregelt, sondern ergibt sich anhand der Steuerung und Einstellung der Motor-Phasenströme ia, ib, ic.

In einer optionalen Ausführungsform befindet sich eine Komponente zur passiven (insbesondere ohne gesteuerte Schalter) Leistungsfaktorkorrektur - wie beispielsweise eine Drossel - in der elektrischen Verbindung zwischen dem ersten Gleichspannungsanschluss 27 oder dem zweiten Gleichspannungsanschluss 28 einerseits und dem optional vorhandenen Zwischenkreiskondensator 30 oder der Wechselrichterschaltung 31 andererseits.

Die Gleichrichterschaltung 25 weist beim Ausführungsbeispiel keine steuerbaren Schalter auf. Das Leiten und Sperren der Gleichrichterdioden 26 ergibt sich durch die sinusförmige Versorgungsspannung und der im Gleichspannungszwischenkreis 29 anliegenden Zwischenkreisspannung uz.

An den Gleichspannungszwischenkreis 29 ist eine steuerbare Wechselrichterschaltung 31 angeschlossen. Basierend auf der im Gleichspannungszwischenkreis 29 bereitgestellten elektrischen Energie bzw. elektrischen Leistung werden die Motor-Phasenströme ia, ib, ic durch Steuerung der Wechselrichterschaltung 31 zur Erzielung einer vorgegebenen Stromform bzw. eines vorgegebenen Stromverlaufs für einen, mehrere und vorzugsweise alle Motor-Phasenströme ia, ib, ic gesteuert oder geregelt, wodurch die jeweils entsprechende Phase des Versorgungsstromes einen Stromverlauf erhält, der einem vorgegebenen Stromverlauf wf entsprechen kann.

Die Wechselrichterschaltung 31 hat für jede Motorphase 17, 18, 19 jeweils einen separaten Wechselrichterzweig, die parallel zueinander geschaltet sind und an denen die Zwischenkreisspannung uz bereitgestellt wird. Jeder Wechselrichterzweig ist somit elektrisch mit dem ersten Gleichspannungsanschluss 27 einerseits und mit dem zweiten Gleichspannungsanschluss 28 andererseits verbunden. In jedem Wechselrichterzweig sind zwei steuerbare Schalter 32 in Reihe zueinander geschaltet. Der Mittenabgriff zwischen den beiden steuerbaren Schaltern 32 ist mit der zugeordneten Motorphase 17 oder 18 oder 19 verbunden.

Jeder steuerbare Schalter 32 wird durch ein zugeordnetes Steuersignal bi (i = 1 bis 6) angesteuert, das von einer Steuerschaltung 33 erzeugt wird. Die steuerbaren Schalter 32 sind vorzugsweise Halbleiterschalter, beispielsweise Bipolartransistoren, Feldeffekttransistoren, IGBTs oder dergleichen. Jeder steuerbare Schalter 32 kann mit Hilfe des jeweils zugeordneten Steuersignals bi zwischen einem leitenden Zustand und einem sperrenden Zustand umgeschaltet werden. Dabei ist in jedem Wechselrichterzweig bzw. in jeder Reihenschaltung aus zwei steuerbaren Schaltern 32 maximal einer der beiden steuerbaren Schalter 32 elektrisch leitend. In jedem Wechselrichterzweig können daher drei Schaltzustände vorliegen, nämlich:

- der mit dem ersten Gleichspannungsanschluss 27 verbundene steuerbare Schalter 32 ist elektrisch leitend, während der mit dem zweiten Gleichspannungsanschluss 28 verbundene steuerbare Schalter 32 sperrt;

- der mit dem ersten Gleichspannungsanschluss 27 verbundene steuerbare Schalter 32 sperrt, während der mit dem zweiten Gleichspannungsanschluss 28 verbundene steuerbare Schalter 32 elektrisch leitend ist;

- beide steuerbaren Schalter 32 sperren.

Die Steuersignale bi (i = 1, 2, ..., 6) für die Wechselrichterschaltung 31 werden durch die Steuerschaltung 33 basierend auf einer Vektorregelung oder feldorientierten Regelung des Elektromotors 12 ermittelt. Im Rahmen der Vektorregelung stehen zwei unabhängig voneinander einstellbare Rotorströme zur Verfügung: ein erster Rotorstrom id in Richtung der d-Achse und ein zweiter Rotorstrom iq in Richtung der q-Achse des Rotorkoordinatensystems d, q. Der erste Rotorstrom id gibt die magnetische Flussdichte des Rotormagnetfeldes an, während der zweite Rotorstrom iq zur Beeinflussung und Einstellung der mechanischen Leistung Pm und insbesondere des Drehmoments M des Elektromotors 12 dient. Mittels des ersten Rotorstroms id steht somit eine Variable zur Verfügung, deren Anpassung die mechanische Leistung Pm nicht beeinflusst und mittels der der gewünschte Stromverlauf der Motor-Phasenströme ia, ib, ic und damit mittelbar auch der entsprechenden Phasen des Versorgungsstromes iv erreicht werden kann.

Beim Ausführungsbeispiel werden die Motor-Phasenströme ia, ib, ic mittels jeweils eines Stromsensors erfasst und ein Stromsensorsignal, das den jeweiligen Motor-Phasenstrom ia, ib, ic beschreibt, wird der Steuerschaltung 33 übermittelt. Zusätzlich können weitere Sensoren vorhanden sein, um einen oder mehrere Betriebsparameter des Elektromotors 15 zu erfassen. Beispielsweise kann ein Drehpositionssensor 38 vorhanden sein, um eine Drehposition $\alpha$ des Rotors 15 um die Drehachse zu ermitteln (z.B. Encoder, Resolver, optischer oder induktiver Inkremental- oder Absolutwertsensor). Außerdem kann optional ein Drehmomentsensor 39 zur Erfassung des Drehmoments M vorhanden sein, beispielsweise um das Drehmoment M mittels des zweiten Rotorstroms iq und/oder eine sich lastabhängig ergebende Drehzahl rpm zu steuern oder zu regeln.

Anhand der Änderung der Drehposition $\alpha$ kann beispielsweise auch die aktuelle Drehzahl rpm des Rotors 15 ermittelt werden. Zusätzlich oder alternativ kann ein Drehzahlsensor 40 zur Ermittlung der Drehzahl rpm vorgesehen werden.

In Figur 3 ist schematisch ein Blockschaltbild einer Regelung dargestellt, die mittels der Steuerschaltung 33 realisiert bzw. in der Steuerschaltung 33 implementiert werden kann.

Für die wenigstens eine Phase iv1, iv2 iv3 des Versorgungsstromes iv wird eine gewünschte Stromform bzw. ein gewünschter Stromverlauf wf vorgegeben. Abhängig davon kann in einer Sollwertermittlungseinheit 45 ein Sollwert ids für den ersten Rotorstrom id ermittelt werden. In der Sollwertermittlungseinheit 45 können Modelle und/oder Algorithmen und/oder Kennfelder oder dergleichen ermittelt werden, die einen Zusammenhang zwischen dem vorgegebenen Stromverlauf wf und dem Sollwert ids des ersten Rotorstroms id beschreiben.

Elektrische Leistung bzw. Energie kann aus dem Gleichspannungszwischenkreis 29 entnommen und zur Beeinflussung der Flussdichte des Rotormagnetfeldes in das Magnetfeld der betreffenden Motorphase 17, 18, 19 transferiert wird oder umgekehrt kann Leistung bzw. Energie aus dem Magnetfeld in den Gleichspannungszwischenkreis 29 transferiert werden. Ist der erste Rotorstrom id sowie dessen zeitliche Änderung jeweils positiv oder jeweils negativ, wird elektrische Energie aus dem Gleichspannungszwischenkreis 29 in das Magnetfeld der betreffenden Motorphase 17, 18, 19 transferiert. Wenn der erste Rotorstrom id und dessen zeitliche Änderung unterschiedliche Vorzeichen haben (Rotorstrom id größer als Null und zeitliche Änderung kleiner als Null oder umgekehrt), wird Energie aus dem Magnetfeld der betreffenden Motorphase 17, 18, 19 in den Gleichspannungszwischenkreis 29 transferiert. Dieser Transfer von Energie kann also über den ersten Rotorstrom id basierend auf der Vektorregelung so ausgeführt werden, dass die mechanische Leistung Pm des Elektromotors 12 unbeeinträchtigt aufrechterhalten werden kann.

Unter der Annahme, dass die Reluktanzleistung gleich Null ist, gilt für die elektrische Leistung Pel des Elektromotors 12:

$$Pel = \frac{3}{2} \cdot \left( Rs(id(t)^2 + iq(t)^2) + Ls \left( id(t)\frac{id(t)}{dt} + iq\frac{iq(t)}{dt} \right) + iq \cdot uq \right) \qquad （1）$$

Dabei ist Rs der Widerstand einer Motorphase 17, 18, 19, Ls die in das Rotorkoordinatensystem d, q transformierte Induktivität einer Motorphase 17, 18, 19, id der erste Rotorstrom, iq der zweite Rotorstrom und uq die Polradspannung im Rotorkoordinatensystem. Die Polradspannung uq im Rotorkoordinatensystem ist bekannt und kann abhängig vom Betriebszustand bzw. vom Arbeitspunkt des Elektromotors 12 durch eine Tabelle, eine Funktion, eine Kennlinie, ein Kennfeld oder dergleichen vorgegeben sein.

Für die Leistung Pz im Gleichspannungszwischenkreis gilt:

$$Pz = Cz\frac{uz(t)}{dt}uz(t) \qquad （2）$$

wobei Cz die Kapazität des Zwischenkreiskondensators 30 und uz die Zwischenkreisspannung ist.

Daraus ergibt sich die vom Versorgungsnetz bzw. der Wechselspannungsquelle 14 bereitzustellende Versorgungsleistung Pv aus der Summe der elektrischen Leistung des Elektromotors 12 und der elektrischen Leistung im Gleichspannungszwischenkreis:

$$Pv = Pel + Pz = uv(t) \cdot iv(t) \qquad （3）$$

Die vom Versorgungsnetz bereitgestellte Leistung Pv entspricht außerdem dem Produkt aus dem Versorgungsstrom iv mit der Versorgungsspannung uv.

Solange der Elektromotor 12 in einem aktuellen Betriebspunkt arbeitet, ist der zweite Rotorstrom iq konstant und seine zeitliche Änderung daher gleich Null. Wird nun für den Versorgungsstrom iv eine Stromform gewünscht, wie z.B. ein sinusförmiger Verlauf ohne Phasenverschiebung gegenüber der Netzspannung uv, kann basierend auf den Gleichungen (1) bis (3) eine Ermittlung des ersten Rotorstroms id erfolgen.

Somit kann durch einen zu erreichenden Stromverlauf für den Versorgungsstrom iv basierend auf den vorstehenden Gleichungen ein Sollwert ids für den ersten Rotorstrom id ermittelt werden.

Ein Sollwert iqs für den zweiten Rotorstrom iq wird abhängig von der gewünschten mechanischen Leistung Pm bzw. dem gewünschten Drehmoment M des Elektromotors 12 ermittelt.

Basierend auf den aktuellen Motor-Phasenströmen ia, ib, ic und unter Berücksichtigung der aktuellen Drehposition α des Rotors 15 können die aktuellen Istwerte für den ersten Rotorstrom id und den zweiten Rotorstrom iq in einer Transformationseinheit 46 ermittelt werden. Beispielsweise kann die Transformationseinheit 46 die Motor-Phasenströme ia, ib, ic unter Verwendung einer Clarke-Transformation und einer Park-Transformation in die Rotorströme id, iq des Rotorkoordinatensystems d, q transferieren. Eine Differenz Δid des ersten Rotorstroms zwischen dem Sollwert ids und dem Istwert des ersten Rotorstroms id kann ermittelt und einem Regler 47, beispielsgemäß einem PI-Regler, zugeführt werden. Analog hierzu kann die Differenz Δiq des zweiten Rotorstromes zwischen dem Sollwert iqs und dem Istwert für den zweiten Rotorstrom iq ermittelt und ebenfalls einem Regler 47, beispielsgemäß einem PI-Regler, zugeführt werden. Die Reglerausgänge der beiden Regler 47 stellen Rotor-Sollspannungen uds, uqs im Rotorkoordinatensystem d, q bereit. Diese werden im Anschluss über eine Rücktransformation (Clarke-Park) mittels einer Rücktransformationseinheit 48 in die Motorphasen-Sollspannungen uas, ubs, ucs, für die Motorphasen umgerechnet, aus denen sich wiederum die Motorphasenströme ia, ib, ic ergeben.

Die Motorphasen-Sollspannungen uas, ubs, ucs werden einer Steuersignalermittlungseinheit 49 übermittelt. Der Steuersignalermittlungseinheit 49 können optional weitere Parameter, wie zum Beispiel die Drehposition α, übermittelt werden. Die Steuersignalermittlungseinheit 49 ist dazu eingerichtet, die Steuersignale b1 bis b6 zur Ansteuerung der Wechselrichterschaltung 31 zu ermitteln. Dazu werden die Motorphasen-Sollspannungen uas, ubs, ucs basierend auf einer Raumzeigermodulation (Space Vector Pulse Width Modulation) zur Berechnung der Steuersignale b1 bis b6 verwendet.

Durch Ansteuern des Wechselrichters 31 basierend auf den derart ermittelten Steuersignalen b1 bis b6 stellen sich dann wiederum die entsprechenden Istwerte für die Motor-Phasenströme ia, ib, ic ein, die wiederum die jeweils zugeordnete Phase des Versorgungsstromes iv beeinflussen, derart dass sie der vorgegebenen Stromform bzw. dem vorgegebenen Stromverlauf wf entsprechen.

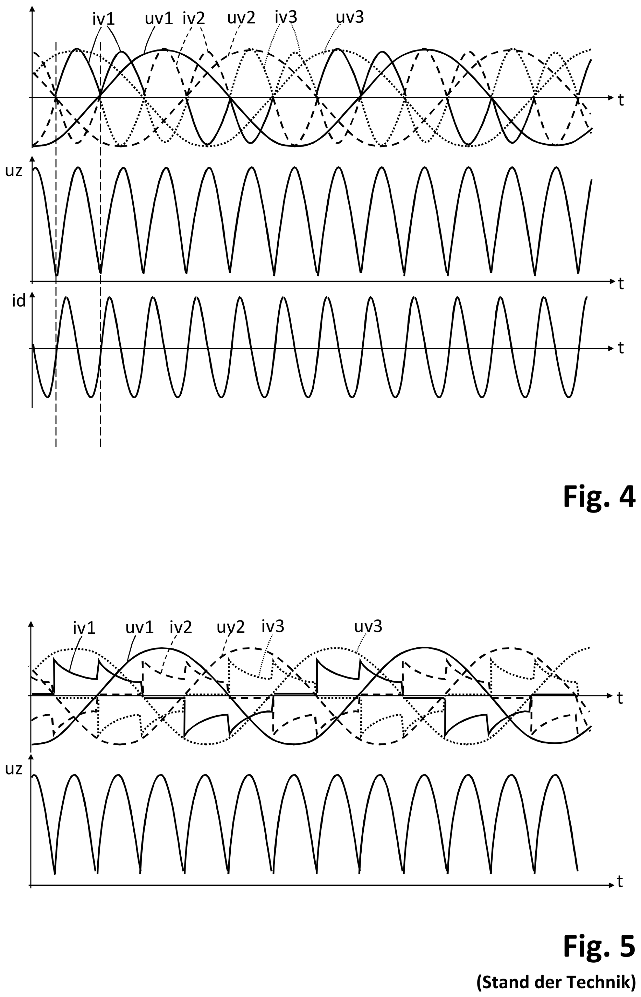

In Figur 4 ist der sich durch die Erfindung ergebende Stromverlauf für die Motor-Phasenströme ia, ib, ic und deren Phasenlage gegenüber der jeweils zugeordneten Phasenspannung ua, ub, uc veranschaulicht. Figur 4 zeigt auch die Zwischenkreisspannung uz sowie den ersten Rotorstrom id, der wie vorstehend erläutert ermittelt wurde, so dass sich die Spannungsverläufe uv1, uv2, uv3 der Phasen der Versorgungsspannung uv und die Stromverläufe iv1, iv2, iv3 der Phasen des Versorgungsstromes iv ergeben.

Im Vergleich dazu zeigt Figur 5 Spannungsverläufe uv1, uv2, uv3 der Phasen der Versorgungsspannung uv und die Stromverläufe iv1, iv2, iv3 der Phasen des Versorgungsstromes iv sowie der Zwischenkreisspannung uz ohne die erfindungsgemäße Implementierung und Beeinflussung mittels des ersten Rotorstroms id. Es ist zu erkennen, dass die Stromverläufe iv1, iv2, iv3 der Phasen des Versorgungsstromes iv steile Flanken und sprunghafte Verläufe aufweisen, wodurch sich erhebliche Oberwellen des Versorgungsstromes iv ergeben, was durch die vorliegende Erfindung vermieden ist, wie Figur 4 zeigt.

Wie es in Figur 4 zu erkennen ist, weisen die erfindungsgemäßen Stromverläufe iv1, iv2, iv3 der Phasen des Versorgungsstromes iv beispielsgemäß sinusförmige Halbwellen (positive und negative Halbwellen) auf. Beispielsweise hat jeder Stromverlauf iv1, iv2, iv3 der Phasen des Versorgungsstromes iv unmittelbar vor und unmittelbar nach einem Nulldurchgang des Spannungsverlaufs uv1, uv2, uv3 der zugeordneten Phase der Versorgungsspannung uv mit einem positiven Phasenspannungsgradienten jeweils eine positive Halbwelle und unmittelbar vor und hinter einem Nulldurchgang des Spannungsverlaufs uv1, uv2, uv3 der zugeordneten Phase der Versorgungsspannung uv mit negativem Phasenspannungsgradienten jeweils eine negative Halbwelle. Zwischen den beiden positiven Halbwellen und den beiden negativen Halbwellen ist der jeweilige Stromverlauf iv1, iv2, iv3 der Phasen des Versorgungsstromes iv gleich Null.

Die Zeitdauer der Halbwellen ist vorzugsweise zumindest im Wesentlichen gleich lang. Die Zeitdauer, in der ein Stromverlauf iv1, iv2, iv3 der Phasen des Versorgungsstromes iv zwischen den beiden positiven und den beiden negativen Halbwellen gleich Null ist, entspricht vorzugsweise der Zeitdauer einer positiven oder negativen Halbwelle. Eine Periodendauer des Spannungsverlaufs uv1, uv2, uv3 der Phase der Versorgungsspannung uv entspricht beispielsgemäß der Zeitdauer von sechs Halbwellen des Stromverlaufs iv1, iv2, iv3 der zugeordneten Phase des Versorgungsstromes iv.

In Figur 4 ist ebenfalls ersichtlich, dass der erste Rotorstrom id beim Ausführungsbeispiel einen sinusförmigen Verlauf hat und die Periodendauer des ersten Rotorstromes id der Zeitdauer einer Halbwelle eines Stromverlaufs iv1, iv2, iv3 der Phasen des Versorgungsstromes entspricht und somit einem Sechstel der Periodendauer des Spannungsverlaufs uv1, uv2, uv3 der Phasen der Versorgungsspannung uv. Die in Figur 4 dargestellte Zwischenkreisspannung uz ergibt sich als Folge der Einstellung des ersten Rotorstromes id und der Motor-Phasenströme ia, ib, ic. Die Zwischenkreisspannung uz wird nicht entsprechend einer Vorgabe gesteuert oder geregelt.

Die Erfindung betrifft eine Vorrichtung 13 sowie ein Verfahren zum Betreiben eines Elektromotors 12. Der Elektromotor 12 kann beispielsweise Bestandteil einer Strömungserzeugungseinrichtung sein, wie zum Beispiel eines Ventilators 11. Die Vorrichtung 13 hat eine Wandlerschaltung 24 mit einer vorzugsweise passiven Gleichrichterschaltung 25 und einer steuerbare Wechselrichterschaltung 31, die miteinander gekoppelt sind, insbesondere über einen Gleichspannungszwischenkreis 29. Der Gleichspannungszwischenkreis 29 kann optional einen Zwischenkreiskondensator 30 oder einen anderen Zwischenkreisenergiespeicher aufweisen. Vorzugsweise ist ausschließlich die Wechselrichterschaltung 31 steuerbar. Es wird eine gewünschte Stromform bzw. ein gewünschter Sollstromverlauf (vorgegebener Stromverlauf wf) für wenigstens einen Motor-Phasenstrom ia, ib, ic und/oder wenigstens eine Phase eines Versorgungsstromes iv des Versorgungsnetzes vorgegeben. Basierend auf einer Vektorregelung (feldorientierte Regelung) des Elektromotors 12 kann ein erster Rotorstrom id in einem rotorfesten Koordinatensystem d, q ermittelt werden, wobei der erste Rotorstrom id die mechanische Leistung Pm des Elektromotors 12 nicht beeinflusst. Basierend auf dem Rotorstrom id können dann ein oder mehrere Steuersignale b1 bis b6 zur Steuerung der Wechselrichterschaltung 31 in einer Steuerschaltung 33 ermittelt und die Wechselrichterschaltung 31 entsprechend gesteuert werden, wodurch sich der gewünschte Stromverlauf wf für die Motor-Phasenströme ia, ib, ic bzw. und/oder die wenigstens eine Phase eines Versorgungsstromes iv ergibt. Zumindest eine steuerbare bzw. aktive Schaltung zur Leistungsfaktorkorrektur kann entfallen, wobei eine rein passive, nicht steuerbare Schaltung zur Leistungsfaktorkorrektur (z.B. wenigstens eine Drossel) optional vorhanden sein kann. Der Versorgungsstrom iv aus dem Versorgungsnetz wird durch Speichern bzw. Entnehmen von Energie in bzw. aus dem Magnetfeld des Elektromotors 12 beeinflusst, ohne dabei die vom Elektromotor 12 bereitgestellte mechanische Leistung Pm ändern zu müssen.

Bezugszeichenliste:

| | |
|---|---|
| 10 | System |
| 11 | Ventilator |
| 12 | Elektromotor |
| 13 | Vorrichtung |
| 14 | Wechselspannungsquelle |
| 15 | Rotor |
| 16 | Stator |
| 17 | erste Motorphase |
| 18 | zweite Motorphase |
| 19 | dritte Motorphase |

| | |
|---|---|
| 24 | Wandlerschaltung |
| 25 | Gleichrichterschaltung |
| 26 | Gleichrichterdiode |
| 27 | erster Gleichspannungsanschluss |
| 28 | zweiter Gleichspannungsanschluss |
| 29 | Gleichspannungszwischenkreis |
| 30 | Zwischenkreiskondensator |
| 31 | Wechselrichterschaltung |
| 32 | steuerbarer Schalter |
| 33 | Steuerschaltung |

| | |
|---|---|
| 37 | Stromsensor |
| 38 | Drehpositionssensor |
| 39 | Drehmomentsensor |
| 40 | Drehzahlsensor |

| | |
|---|---|
| 45 | Sollwertermittlungseinheit |
| 46 | Transformationseinheit |
| 47 | Regler |
| 48 | Rücktransformationseinheit |
| 49 | Steuersignalermittlungseinheit |

| | |
|---|---|
| $\alpha$ | Drehposition des Rotors |

| | |
|---|---|
| bi | Steuersignal (i = 1 bis 6) |

EP 4 734 356 A1

d  d-Achse des Rotorkoordinatensystems
ia  erster Motor-Phasenstrom
ib  zweiter Motor-Phasenstrom
ic  dritter Motor-Phasenstrom
id  erster Rotorstrom
ids  Sollwert für den ersten Rotorstrom
iq  zweiter Rotorstrom
iqs  Sollwert für den zweiten Rotorstrom
iv  Versorgungsstrom
iv  erste Phase des Versorgungsstroms
iv  zweite Phase des Versorgungsstroms
iv  dritte Phase des Versorgungsstroms
M  Drehmoment
Pm  mechanische Leistung
q  q-Achse des Rotorkoordinatensystems
rpm  Drehzahl
ua  erste Motor-Phasenspannung
uas  Sollspannung der ersten Motor-Phasenspannung
ub  zweite Motor-Phasenspannung
ubs  Sollspannung der zweiten Motor-Phasenspannung
uc  dritte Motor-Phasenspannung
ucs  Sollspannung der dritten Motor-Phasenspannung
uds  erste Rotor-Sollspannung
uqs  zweite Rotor-Sollspannung
uv  Versorgungsspannung
uv1  erste Phase der Versorgungsspannung
uv2  zweite Phase der Versorgungsspannung
uv3  dritte Phase der Versorgungsspannung
uz  Zwischenkreisspannung
wf  vorgegebener Stromverlauf

**Patentansprüche**

1. Vorrichtung (13) zum Betreiben eines Elektromotors (12) aufweisend:

   - eine Wandlerschaltung (24), die eine Gleichrichterschaltung (25) und eine steuerbare Wechselrichterschaltung (31) aufweist, und die eingangsseitig an ein Wechselspannungsquelle (14) anschließbar ist und ausgangsseitig mit dem Elektromotor (12) verbunden ist, wobei im Betrieb ein Versorgungsstrom (iv) von der Wechselspannungsquelle (14) in die Gleichrichterschaltung (25) fließt,
   - eine Steuerschaltung (33), die dazu eingerichtet ist:

     o nur einen ersten Rotorstrom (id) von wenigstens einem definierten Rotorstrom (id, iq) derart zu ermitteln und zu verwenden, dass sich ein vorgegebener Stromverlauf (wf) für wenigstens eine Phase (iv1, iv2, iv3) des Versorgungsstromes (iv) ergibt und dabei die vom Elektromotor (12) bereitgestellte mechanische Leistung (Pm) unbeeinflusst bleibt, wobei der wenigstens eine Rotorstrom (id, iq) in einem relativ zu einem Rotor (15) des Elektromotors (12) unbeweglichen Rotorkoordinatensystem (d, q) definiert ist,
     o basierend auf dem wenigstens einen Rotorstrom (id, iq) wenigstens ein Steuersignal (b1 bis b6) für die Wechselrichterschaltung (31) zu ermitteln und
     o die Wechselrichterschaltung (31) mittels des wenigstens einen Steuersignals (b1 bis b6) zu steuern.

2. Vorrichtung nach Anspruch 1, wobei der Steuerschaltung (33) für jede Phase (iv1, iv2, iv3) des Versorgungsstromes (iv) jeweils ein Stromverlauf (wf) vorgegeben ist.

3. Vorrichtung nach Anspruch 1 oder 2, wobei die Steuerschaltung (33) dazu eingerichtet ist, den ersten Rotorstrom (id) derart zu ermitteln, dass sowohl eine Drehzahl (rpm) des Rotors (15) des Elektromotors (12) als auch ein vom Elektromotor (12) bereitgestelltes Drehmoment (M) unbeeinflusst bleiben.

4. Vorrichtung nach einem der vorhergehenden Ansprüche, wobei der wenigstens eine Rotorstrom (id, iq) jeweils einen Betrag für einen Stromvektor definiert, mittels dem eine Vektorregelung des Elektromotors (12) erfolgen kann.

5. Vorrichtung nach einem der vorhergehenden Ansprüche, wobei die Steuerschaltung (33) dazu eingerichtet ist, zur Einstellung der mechanischen Leistung (Pm) einen vom ersten Rotorstrom (id) verschiedenen zweiten Rotorstrom (iq) zu verwenden.

6. Vorrichtung nach einem der vorhergehenden Ansprüche, wobei zur Beeinflussung des wenigstens einen von der Wandlerschaltung (24) bereitgestellten Motor-Phasenstroms (ia, ib, ic) nur der Rotorstrom (id) verwendet wird, der eine magnetische Flussdichte im Magnetfeld des Rotors (15) beeinflusst.

7. Vorrichtung nach einem der vorhergehenden Ansprüche, wobei die die Steuerschaltung (33) dazu eingerichtet ist, basierend auf dem wenigstens einen Rotorstrom (id, iq) eine Raumzeigermodulation der Wechselrichterschaltung (31) durchzuführen.

8. Vorrichtung nach einem der vorhergehenden Ansprüche, wobei die Wandlerschaltung (24) ohne eine zusätzliche steuerbare Schaltung zur Durchführung einer Leistungsfaktorkorrektur ausgeführt ist.

9. Vorrichtung nach einem der vorhergehenden Ansprüche, wobei die Gleichrichterschaltung (25) keine steuerbaren Schalter aufweist.

10. Vorrichtung nach einem der vorhergehenden Ansprüche, wobei die Wandlerschaltung (24) einen Gleichspannungszwischenkreis (29) zwischen der Gleichrichterschaltung (25) und der Wechselrichterschaltung (31) aufweist, wobei im Gleichspannungszwischenkreis (29) eine pulsierende, gleichgerichtete Zwischenkreisspannung (uz) anliegt.

11. Vorrichtung nach Anspruch 10, wobei der Gleichspannungszwischenkreis (29) einen Zwischenkreiskondensator (30) und/oder einen anderen Energiespeicher für elektrische Energie aufweist.

12. Vorrichtung nach einem der vorhergehenden Ansprüche, wobei der Elektromotor (12) ein bürstenloser Gleichstrommotor ist.

13. System (10) aufweisend die Vorrichtung (13) nach einem der vorhergehenden Ansprüche sowie den Elektromotor (12).

14. Verfahren zum Betreiben eines Elektromotors (12) umfassend:

- Gleichrichten einer von einem Wechselspannungsquelle (14) bereitgestellten Versorgungsspannung (uv) mittels einer Gleichrichterschaltung (25), wobei ein Versorgungsstrom (iv) von der Wechselspannungsquelle (14) in die Gleichrichterschaltung (25) fließt,
- Definieren wenigstens eines Rotorstroms (id, iq) in einem relativ zu einem Rotor (15) des Elektromotors (12) unbeweglichen Rotorkoordinatensystem (d, q) und Ermitteln und Verwenden nur eines ersten Rotorstroms (id) von dem definierten wenigstens einen Rotorstrom (id, iq) derart, dass sich ein vorgegebener Stromverlauf für wenigstens eine Phase (iv1, iv2, iv3) des Versorgungsstromes (iv) ergibt und dabei die vom Elektromotor (12) bereitgestellte mechanische Leistung (Pm) unbeeinflusst bleibt,
- Ermitteln wenigstens eines Steuersignals (b1 bis b6) basierend auf dem wenigstens einen Rotorstrom (id, iq),
- Wechselrichten der von der Gleichrichterschaltung (25) bereitgestellten gleichgerichteten Spannung basierend dem wenigstens einem Steuersignal (b1 bis b6) mittels einer Wechselrichterschaltung (31) zur Erzeugung des Stromverlaufs für die wenigstens eine Phase (iv1, iv2, iv3) des Versorgungsstromes (iv).

**Fig. 1**

**Fig. 2**

**Fig. 3**

iv1  uv1  iv2  uv2  iv3  uv3

uz

t

id

t

**Fig. 4**

iv1  uv1  iv2  uy2  iv3  uv3

t

uz

t

**Fig. 5**

**(Stand der Technik)**

Europäisches Patentamt
European Patent Office
Office européen des brevets

# EUROPÄISCHER RECHERCHENBERICHT

Nummer der Anmeldung

EP 25 20 9258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/336101 A1 (YILDIRIM SEYIT [TR]) 19. Oktober 2023 (2023-10-19) * Absätze [0046], [0055], [0061]; Abbildungen 2,3 * ----- | 1-13 | INV. H02P21/22 |
| X | US 2014/232309 A1 (ZHOU YUEQIANG [JP] ET AL) 21. August 2014 (2014-08-21) * Absätze [0058], [0069]; Abbildungen 1,8 * ----- | 14 | |
| A | EP 4 432 548 A1 (NXP USA INC [US]) 18. September 2024 (2024-09-18) * Abbildung 3 * ----- | 1-14 | |
| A | DE 10 2017 126150 A1 (EBM PAPST MULFINGEN GMBH & CO KG [DE]) 9. Mai 2019 (2019-05-09) * Absatz [0029] * ----- | 1-14 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 5. März 2026 | Schneider, Gernot |

EPO FORM 1503 03.82 (P04C03)

# EP 4 734 356 A1

**ANHANG ZUM EUROPÄISCHEN RECHERCHENBERICHT
ÜBER DIE EUROPÄISCHE PATENTANMELDUNG NR.**

EP 25 20 9258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2026

| Im Recherchenbericht angeführtes Patentdokument | Datum der Veröffentlichung | Mitglied(er) der Patentfamilie | Datum der Veröffentlichung |
|---|---|---|---|
| US 2023336101 A1 | 19-10-2023 | CN 116034536 A | 28-04-2023 |
| | | EP 4211789 A1 | 19-07-2023 |
| | | JP 2023540556 A | 25-09-2023 |
| | | KR 20230061534 A | 08-05-2023 |
| | | US 2023336101 A1 | 19-10-2023 |
| | | WO 2022053127 A1 | 17-03-2022 |
| US 2014232309 A1 | 21-08-2014 | CN 103858333 A | 11-06-2014 |
| | | JP 5304937 B2 | 02-10-2013 |
| | | JP 2013085455 A | 09-05-2013 |
| | | US 2014232309 A1 | 21-08-2014 |
| | | WO 2013046728 A1 | 04-04-2013 |
| EP 4432548 A1 | 18-09-2024 | EP 4432548 A1 | 18-09-2024 |
| | | US 2024313679 A1 | 19-09-2024 |
| DE 102017126150 A1 | 09-05-2019 | CN 208508827 U | 15-02-2019 |
| | | DE 102017126150 A1 | 09-05-2019 |
| | | EP 3610570 A1 | 19-02-2020 |
| | | US 2020287483 A1 | 10-09-2020 |
| | | WO 2019091996 A1 | 16-05-2019 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3772165 A1
- EP 2482442 A1
- EP 2276162 A1
- EP 3610570 B1
- CN 115378332 A